# EUROPEAN PATENT SPECIFICATION

(11) **EP 1 270 374 B1**
(45) Date of publication and mention of the grant of the patent: **28.05.2008**
(21) Application number: 02014318.6
(22) Date of filing: 01.07.2002
(51) Int. Cl.: B62D 21/11

(54) **A cross-member for a motor-vehicle suspension system**
Querträger für die Radaufhängung eines Kraftfahrzeuges
Traverse pour la suspension d'un véhicule automobile

(30) Priority: 29.06.2001 IT TO20010627
(43) Date of publication of application: 02.01.2003
(73) Proprietor: Sistemi Sospensioni S.p.A., 20011 Corbetta (MI) (IT)
(72) Inventor: Bovio, Enzo, 10143 Torino (IT); Piccinini, Marco, 10092 Beinasco (Torino) (IT); Spina, Michele, 10136 Torino (IT)
(74) Representative: Rondano, Davide

(56) References cited:
- EP-A- 0 678 441
- EP-A- 0 756 981
- GB-A- 2 333 501
- IT-U- TO 930 163
- US-A- 5 593 001

## Description

The present invention relates to a cross-member for a motor-vehicle suspension system, comprising an extruded central body and side elements which are formed separately and are then mounted on the central body.

GB 2 333 501 discloses a support assembly for mounting functional units of a motor-vehicle, which assembly comprises at least two longitudinal members extending in the longitudinal direction of the vehicle and connected to each other by at least one cross-member. Both the longitudinal members and the cross-member comprise light alloy extruded parts the extrusion axis of which extends in the transverse direction of the vehicle. Each longitudinal member may consist of a plurality of interconnected extruded parts.

This disclosure is taken as basis for the preamble of independant claim 1.

EP 0 678 441 discloses a sub-frame for supporting the suspension arms of a motor-vehicle, which is formed by a pair of side-members and by a pair of cross-members produced by extrusion.

IT TO 930 163 U discloses a sub-frame for a rear suspension of a motor-vehicle, which is formed by a pair of symmetrical side-members provided with seats for attachment to the vehicle body, to the shock-absorbers and to the trailing arms, and by an extruded cross-member connecting the two side-members to each other.

The object of the present invention is to provide embodiments of a cross-member for a motor-vehicle suspension system which have a modular structure and which can be produced at lower cost than cross-members of conventional architecture.

A further object of the invention is to provide embodiments of a cross-member for a motor-vehicle suspension system, the structure of which can be optimized so as to permit a reduction in weight without thereby penalizing mechanical strength characteristics.

Another object of the invention is to provide a cross-member for a motor-vehicle suspension system which has a central body suitable for housing the regulation and adjustment devices and the mountings for the suspension arms.

This and other objects and advantages which will become clearer from the following description are achieved in full by a cross-member for a motor-vehicle suspension system according to the present invention which is characterized as defined in the appended claims and, in particular, in that it comprises:
- an extruded central body, preferably with a geometrical configuration which is symmetrical with respect to a longitudinal vertical plane, and
- side elements which are formed separately from the central body and are then suitably fixed thereto.

The invention will be described in greater detail below, purely by way of non-limiting example, with reference to the appended drawings, in which:
Figure 1 is a perspective view of a motor-vehicle rear suspension system comprising a cross-member according to the invention,
Figure 2 is a perspective view of the cross-member of Figure 1,
Figure 3 is a perspective view of a further embodiment according to the invention of a cross-member for a motor-vehicle rear suspension system,
Figure 4 is a perspective view of the central body of the cross-member of Figure 3,
Figure 5 is a perspective view of an embodiment according to the invention of a cross-member for a motor-vehicle front suspension system,
Figure 6 is a perspective view of the central body of the cross-member of Figure 5, and
Figure 7 is a perspective view of a further embodiment of the central body of the cross-member of Figure 5.

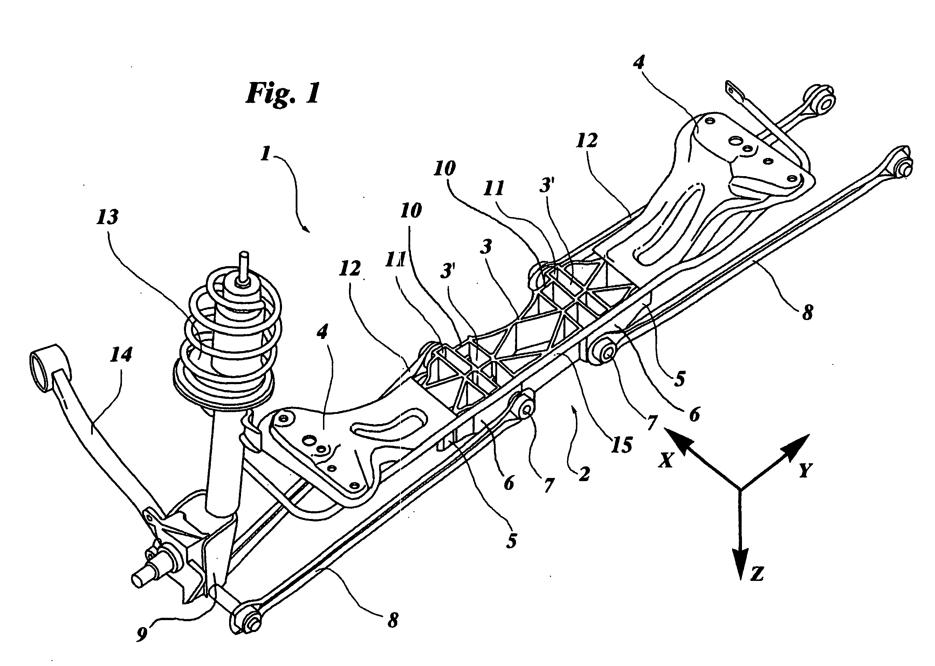

With reference to Figure 1, a motor-vehicle rear suspension system, generally indicated 1, includes a transverse load-bearing element or cross-member 2 comprising a central body 3 which, according to the invention, is produced by extrusion, and two side elements 4, each associated with a respective wheel of the vehicle (not shown).

The central body 3 comprises two portions 3' which are symmetrical with respect to a longitudinal vertical plane x-z of the motor vehicle and which can be extruded integrally with the body or separately, and then joined together.

Outer lateral ends 5 of the two portions 3' of the body 3 are arranged for the fixing of the respective side elements 4 of the cross-member 2.

Vertical rear walls 6 of the portions 3' of the body 3 have mounting regions 7 for the articulation of the inner ends of rear transverse arms 8. The opposite ends of the said arms are articulated to brackets for the connection of respective rear wheel-carriers 9 (of which only the left-hand one is shown in Figure 1).

Similarly, front vertical walls 10 of the portions 3' of the body 3 have respective mounting regions 11 for the articulation of the inner ends of the front transverse arms 12. The opposite ends of the arms 12 are also articulated to the respective wheel-carriers, on sides longitudinally remote from the points of articulation of the rear transverse arms 8.

The left-hand wheel-carrier 9 (and also the right-hand wheel-carrier, in symmetrical manner) is also connected to the chassis of the vehicle (not shown) by means of a shock-absorber 13 and a longitudinal bar 14.

Finally, it is shown a stabilizer bar 15, the ends of which are connected to the shock-absorbers of the suspension system and which is also secured to the side elements 4 of the cross-member 2 by means of U-bolts (not visible in the drawing but known *per se* to a person skilled in the art) which may be formed integrally with the respective side elements of the cross-member, or mounted thereon.

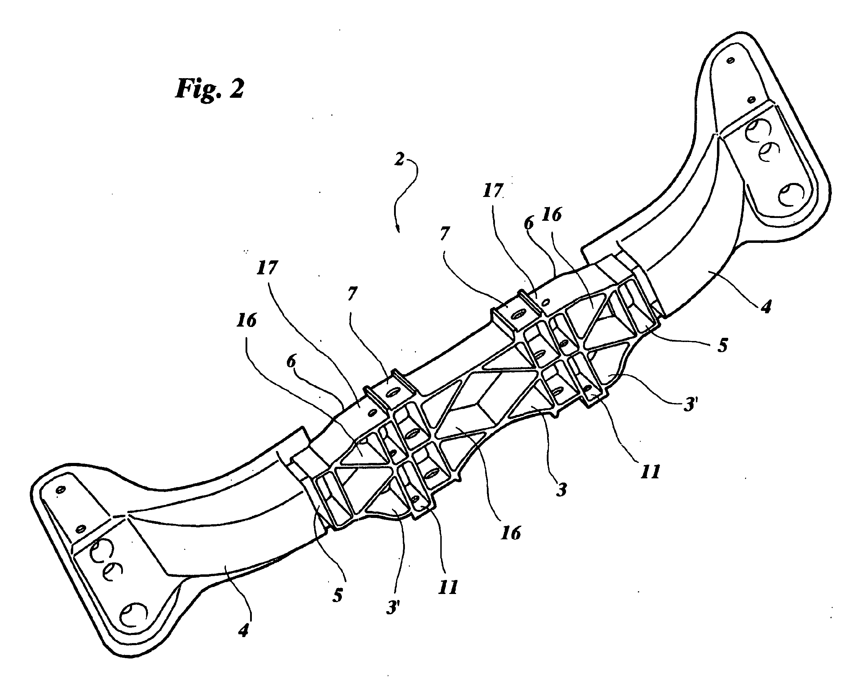

With reference to Figure 2, which shows solely the cross-member 2 of the rear suspension system of Figure 1, with the central body 3 and the two side elements 4, the structure of the body 3 has a plurality of stiffening ribs 16 which, naturally, may have shapes and dimensions selected in dependence on the required design specifications.

Also shown are the ends 5 of the central body 3 which are intended for the fixing of the side elements 4 and the rear and front mounting regions 7 and 11 for the articulation of the inner ends of the rear and front transverse arms 8 and 12, respectively. These mounting regions may be either of the type shown in Figures 1 and 2, with a single opening, or with two coaxial openings formed in longitudinally spaced-apart parallel walls to constitute a cylindrical seat for the engagement of an articulation pin connected to the inner end of the respective arm.

The vertical rear walls 6 of the central body 3 have respective prismatic seats 17 for the mounting of optional cam devices (known *per se* and not shown) for the adjustment/regulation of the suspension system.

According to the invention, the central body 3 is produced by extrusion, advantageously of metallic material (preferably a light alloy based on aluminium or magnesium) or of thermosetting plastics material (optionally filled with reinforcing fibres).

Although, in the embodiment shown in Figures 1 and 2, the extrusion axis is vertical (z axis), insofar as the design of the central body allows, different extrusion axes may be adopted, in particular, axes perpendicular to the vertical axis, for example, a transverse axis (y axis) or a longitudinal axis (x axis).

The symmetrical structure of the central body 3 with respect to the plane x-z renders the separate production of the two portions 3' particularly advantageous and, since these portions 3' are identical to one another, they can be produced by the same extrusion die. The advantage of production in two separate portions is substantially that it is possible to use a die of smaller dimensions than for an integral production of the two portions 3' of the body 3 (halved dimensions in this embodiment).

Similarly, if there is further symmetry with respect to other planes (for example, with respect to a vertical transverse plane) the portions 3' may be further split into identical sub-portions such that they can be produced by extrusion with the use of the same die and then assembled to form the central body 3.

If it is selected to produce the central body in separate portions, the two portions 3', or possibly a larger number of sub-portions, may be connected rigidly in various ways, for example, by gluing. Connection by welding by the technique known as friction stir welding, which offers the advantage of avoiding degradation of the material in the connection regions between the various portions is, however, preferable.

In the embodiment of Figures 1 and 2, the side elements 4 of the cross-member 2 have a box-like structure made of sheet metal (preferably steel or aluminium) or of plastics material. This structure is particularly suitable for production in the form of two facing half-shells, that is, a lower half-shell and an upper half-shell, by means of a process which preferably comprises the steps of:
- preparing a semi-finished product having two integral portions each having a predetermined half-shell shape,
- folding over the semi-finished product along at least one predetermined line so as to arrange its portions facing one another, and
- stabilizing the two half-shell portions, for example, by fixing them together by welding, gluing, or riveting along an edge portion so that they remain facing one another.

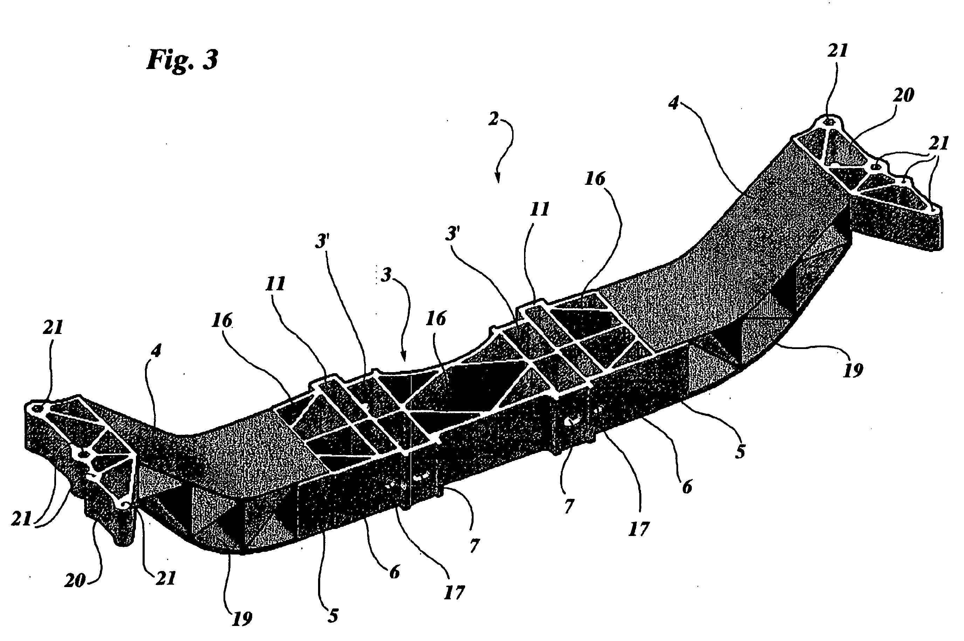

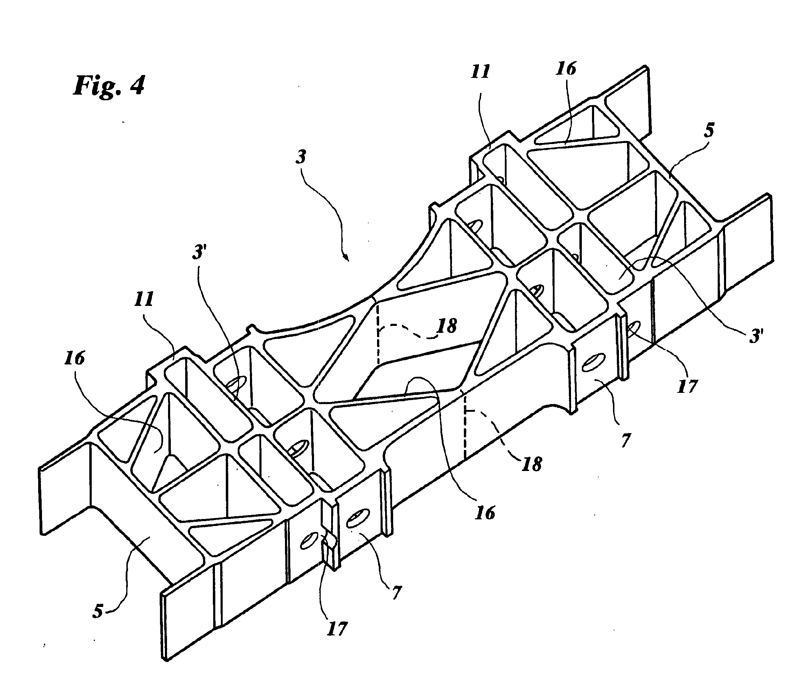

Figure 3 shows a further embodiment of a cross-member 2 for a motor-vehicle rear suspension system in which the central body 3, which is produced by extrusion along the vertical axis also in this embodiment, differs from that of Figures 1 and 2 in the shape of the ribs 16 in its outer side portions, and in the shape of the ends 5 which engage the side elements 4 of the cross-member, as can be seen more clearly in Figure 4. This figure also shows, by broken lines, the line along which the two portions 3' of the central body are joined when they are produced separately.

In the embodiment of Figure 3, the side elements 4, like the central body 3, also have a ribbed structure produced by extrusion. In particular, these elements comprise, respectively:
- fixing portions 20 having a plurality of seats 21 for the insertion of elements for fixing to the chassis of the motor-vehicle, and
- arms or limbs 19 which connect the portions 20 to the central body 3.

The fixing portions 20 are produced by extrusion along a vertical axis so as to permit integral production of the seats 21 with vertical axes. However, the connecting arms 19, the cross-sections of which have curved profiles in transverse vertical planes, can be extruded solely along a longitudinal axis. The side elements 4 are consequently produced by extruding the arms 19 and the fixing portions 20a separately and finally joining each arm to the respective fixing portion by one of the methods described with reference to the joining of the two portions 3' of the central body.

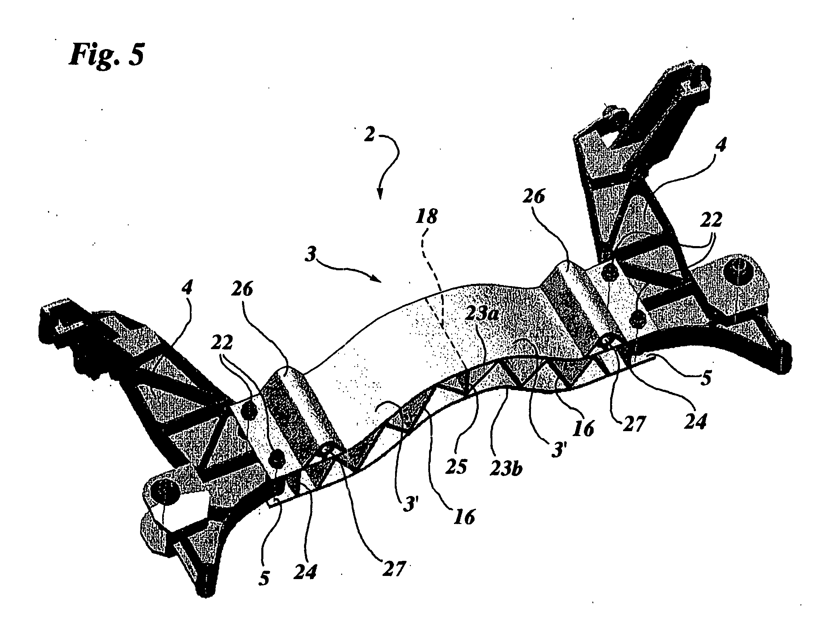

With reference to Figure 5, a further embodiment of a cross-member according to the invention which is suitable for use for a motor-vehicle front suspension system, has side elements 4 which are produced by casting and are attached to the respective portions 3' of the extruded central body 3 (in this embodiment by screws 22).

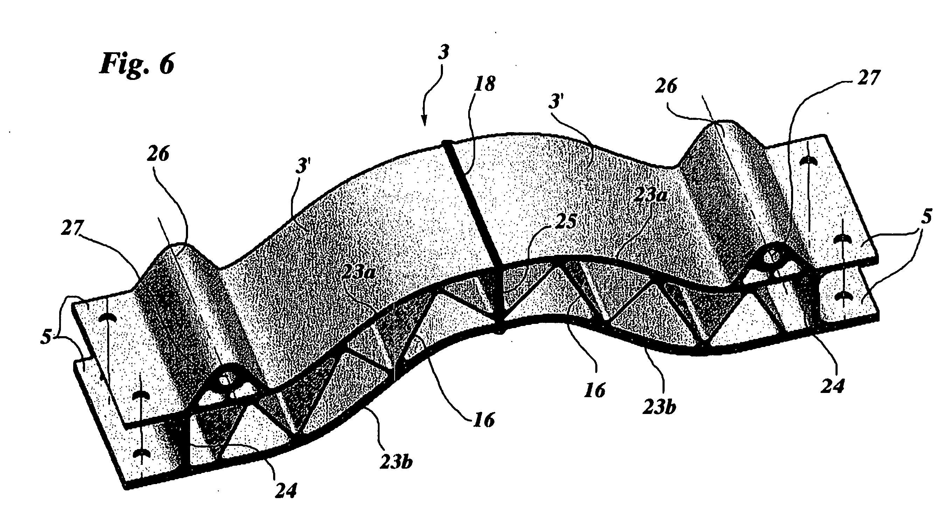

The body 3, as specifically shown in Figure 6, preferably has the shape of a shell which is open longitudinally and is closed at the top and at the bottom by two walls 23a and 23b, respectively, and at the sides by two vertical walls 24. As well as being connected by the vertical walls 24, the upper and lower walls 23a and 23b, which extend parallel to one another, are also connected to one another by means of stiffening ribs 16 which are preferably thinner than the walls, in order to limit the increase in the weight of the cross-member.

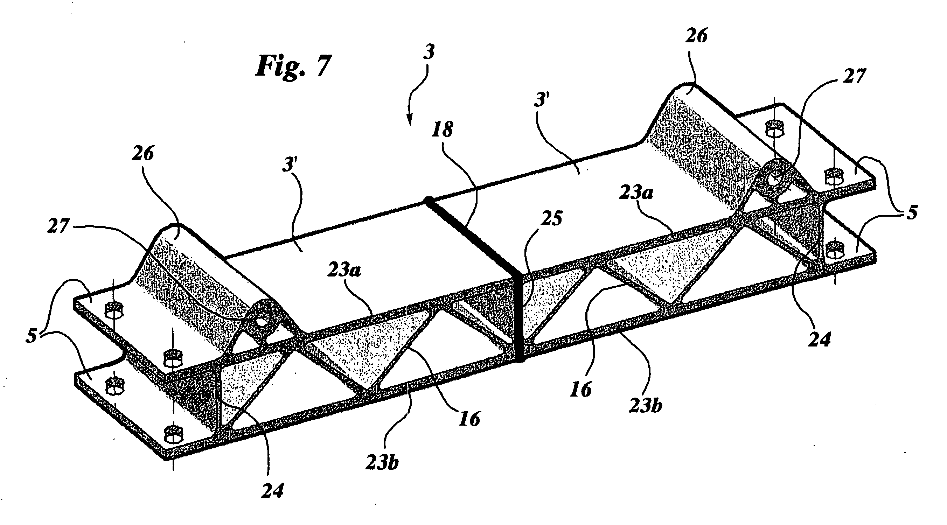

When the central body 3 is extruded in two separate portions 3', as in the embodiment of Figure 6, and also in that of Figure 7, which shows a construction variant of a central body for a front cross-member, both of the portions 3' have a further, inner vertical wall 25 on which the joint 18 is formed for the assembly of the two portions to form the body 3.

In the embodiment of Figures 5 and 6, the upper and lower walls 23a, 23b comprise an inner portion having an arcuate profile, viewed in section in transverse vertical planes, and flat lateral end portions. In the variant of Figure 7, on the other hand, the walls 23a, 23b are completely flat, thus defining a parallelepipedal shell.

In both of the embodiments of Figures 5 to 7, the walls 23a, 23b have flat extension portions which project laterally relative to the vertical walls 24 to define the ends 5 for the fixing of the side elements 4, and in which holes are formed for the insertion of the screws 22.

Ribbed support elements 26, formed directly by extrusion with the portions 3' of the central body 3 on the flat lateral portions of the upper surface 23a, in the vicinity of the ends 5, contain longitudinal cylindrical seats 27 for the insertion of the screws for the fixing of the steering box (not shown).

Given the curved shape of its cross-section, the central body of Figure 6 can be extruded solely along the longitudinal axis. An embodiment with a straight transverse shape such as that of Figure 7, on the other hand, can also be extruded along the transverse axis, by suitable modification in the shape of the seats for the fixing of the side portions 4 and of any additional devices (such as the steering box) to enable these seats to be produced integrally with the body 3.

The production of the central cross-member by extrusion, in accordance with the invention, rather than conventionally by casting, offers a series of advantages such as:
- the ability to achieve greater dimensional accuracy without the need for further machining operations, since extrusion is a sufficiently accurate process,
- the absence of blowholes in the material and hence greater structural strength and greater reliability of the cross-member,
- the ability to produce ribs having shapes and thicknesses which can vary within ranges large enough to permit the actual production of the structures derived by optimization calculations at the design stage, and
- the ability to produce the mountings for the suspension arms and the housings for the devices for the adjustment/regulation of the suspension system and for any other devices (such as the steering box in case of a front suspension system) directly during the extrusion process.

Further advantages result, according to the invention, from the production of the central body in two separate portions and from the joining of these portions by welding by the so-called friction stir welding technique; this in fact produces an assembled structure having strength and stiffness characteristics comparable with those which would be achieved by production in a single piece, but with lower production costs, by virtue of the fact that it is possible to use extrusion dies of smaller dimensions.

The production, according to the invention, of two side elements which are separate from the central body also offers all of the typical advantages of modular structures such as, in particular:
- the fact that the side elements can be produced by methods to be established from time to time on the basis of economic analysis or design specifications and other than the extrusion method used for the central body,
- the fact that different side elements, corresponding, for example, to different models of motor vehicle, can be mounted on the same central body, and
- the fact that it is no longer necessary to replace the entire cross-member in the event of breakage or damage limited purely to the side elements or purely to the central body of the cross-member.

Naturally, the principle of the invention remaining the same, embodiments and manufacturing details may be varied widely with respect to those described and illustrated purely by way of non-limiting example without thereby departing from the scope of the invention as defined in the appended claims.

## Claims

1. A cross-member (2) for a motor-vehicle suspension system (1) comprising a central extruded body (3) and two separate side elements (4), **characterized in that** the central body (3) is obtained by joining together at least two identical body portions (3') which are separately produced by extrusion along an extrusion axis and are symmetrically arranged with respect to a plane of symmetry of the central body (3) containing the extrusion axis.

2. A cross-member according to claim 1, wherein the body portions (3') are joined together by friction stir welding.

3. A cross-member according to claim 1 or claim 2, further comprising mounting regions (7, 11) for articulation of transverse arms (8, 12), which mounting regions are formed integrally with the central body (3).

4. A cross-member according to any one of the preceding claims, further comprising seats (17) for mounting devices for regulation/adjustment of the suspension system (1), which seats are formed integrally with the central body (3).

5. A cross-member according to any one of the preceding claims, wherein seats (27) for mounting a steering box are formed integrally in the central body (3).

6. A cross-member according to any one of the preceding claims, wherein the side elements (4) have a box-like structure.

7. A cross-member according to Claim 6, wherein the side elements (4) are produced in the form of two facing half-shells by a manufacturing process comprising the steps of:
- preparing a semi-finished product having two integral portions of predetermined half-shell shape,
- folding over the semi-finished product along at least one predetermined line so as to arrange its portions facing one another, and
- stabilizing the two half-shell portions, for example, by fixing them together by welding, gluing or riveting along an edge portion so that they remain facing one another.

8. A cross-member according to any one of claims 1 to 6, wherein the side elements (4) comprise at least one extruded portion (19, 20).

9. A cross-member according to any one of claims 1 to 6, wherein the side elements (4) are produced by casting.

10. A cross-member according to any one of the preceding claims, wherein the central body (3) is made of a material which is suitable for extrusion and is to be selected from metals, such as an alloy based on aluminium or magnesium, or thermosetting plastics, preferably filled with reinforcing fibres.

## Patentansprüche

1. Querträger (2) für ein Kraftfahrzeugaufhängungssystem (1), umfassend einen zentralen stranggepressten Körper (3) und zwei separate Seitenelemente (4), **dadurch gekennzeichnet, dass** der zentrale Körper (3) durch Verbindung von mindestens zwei identischen Körperabschnitten (3') erhalten wird, die durch Extrudieren entlang einer Extrusionsachse getrennt hergestellt werden und in Bezug auf eine die Extrusionsachse enthaltende Symmetrieebene des zentralen Körpers (3) symmetrisch angeordnet sind.

2. Querträger gemäß Anspruch 1, wobei die Körperabschnitte (3') durch Reibrührschweißen miteinander verbunden werden.

3. Querträger gemäß Anspruch 1 oder Anspruch 2, weiters umfassend Befestigungsbereiche (7, 11) zum gelenkigen Anbringen von Querarmen (8, 12), welche Befestigungsbereiche im zentralen Körper (3) integriert sind.

4. Querträger gemäß einem der vorhergehenden Ansprüche, weiters umfassend Befestigungsstellen (17) zum Anbringen von Vorrichtungen zur Regelung/Einstellung des Aufhängungssystems (1), welche Befestigungsstellen im zentralen Körper (3) integriert sind.

5. Querträger gemäß einem der vorhergehenden Ansprüche, wobei Befestigungsstellen (27) zum Anbringen eines Lenkgetriebes im zentralen Körper (3) integriert sind.

6. Querträger gemäß einem der vorhergehenden Ansprüche, wobei die Seitenelemente (4) eine kastenartige Struktur haben.

7. Querträger gemäß Anspruch 6, wobei die Seitenelemente (4) in Form zweier einander zugewandter Halbschalen hergestellt werden, und zwar durch ein Fertigungsverfahren, umfassend die folgenden Schritte:
- das Herstellen eines Halbfertigprodukts, das zwei integrierte Abschnitte von vorgegebener Halbschalenform aufweist,
- das Umklappen des Halbfertigprodukts entlang zumindest einer vorgegebenen Linie, um dessen Abschnitte einander zugewandt anzuordnen, und
- das Stabilisieren der beiden Halbschalenteile beispielsweise durch gegenseitige Befestigung durch Schweißen, Kleben oder Vernieten entlang eines Kantenabschnitts, so dass sie einander zugewandt bleiben.

8. Querträger gemäß einem der Ansprüche 1 bis 6, wobei die Seitenelemente (4) mindestens einen stranggepressten Abschnitt (19, 20) umfassen.

9. Querträger gemäß einem der Ansprüche 1 bis 6, wobei die Seitenelemente (4) durch Gießen hergestellt werden.

10. Querträger gemäß einem der vorhergehenden Ansprüche, wobei der zentralen Körper (3) aus einem Material gefertigt ist, das zum Extrudieren geeignet ist und aus Metallen, wie z.B. einer Legierung auf Aluminium- oder Magnesiumbasis, oder Duroplasten, vorzugsweise gefüllt mit Verstärkungsfasern, auszuwählen ist.

## Revendications

1. Traverse (2) pour un système de suspension de véhicule à moteur (1) comprenant un corps extrudé central (3) et deux éléments latéraux (4) séparés, **caractérisé en ce que** le corps central (3) est obtenu en joignant ensemble au moins deux parties de corps identiques (3') qui sont produites séparément par extrusion le long d'un axe d'extrusion et sont agencées symétriquement par rapport à un plan de symétrie du corps central (3) contenant l'axe d'extrusion.

2. Traverse selon la revendication 1, dans laquelle les parties de corps (3') sont jointes ensemble par soudure par friction malaxage.

3. Traverse selon la revendication 1 ou 2, comprenant en outre des régions de montage (7,11) pour l'articulation de bras transversaux (8, 12), lesquelles régions de montage sont formées d'un seul bloc avec le corps central (3).

4. Traverse selon l'une quelconque des revendications précédentes, comprenant en outre des supports (17) pour monter des dispositifs de régulation/réglage du système de suspension (1), lesquels supports sont formés d'un seul bloc avec le corps central (3).

5. Traverse selon l'une quelconque des revendications précédentes, dans laquelle des supports (27) pour monter un boîtier de direction sont formés d'un seul bloc dans le corps central (3).

6. Traverse selon l'une quelconque des revendications précédentes, dans laquelle les éléments latéraux (4) ont une structure en boîtier.

7. Traverse selon la revendication 6, dans laquelle les éléments latéraux (4) sont produits sous la forme de deux demi-coquilles se faisant face par un processus de fabrication comprenant les étapes consistant à :
préparer un produit semi-fini ayant deux parties d'un seul bloc de forme en demi-coquille prédéterminée,
plier le produit semi-fini le long d'au moins une ligne prédéterminée de façon à agencer ses parties pour qu'elles se fassent face, et
stabiliser les deux parties en demi-coquille, par exemple, en les fixant ensemble par soudure, collage ou rivetage le long d'une partie de bord de telle manière qu'elles restent l'une face à l'autre.

8. Traverse selon l'une quelconque des revendications 1 à 6, dans laquelle les éléments latéraux (4) comprennent au moins une partie extrudée (19, 20).

9. Traverse selon l'une quelconque des revendications 1 à 6, dans laquelle les éléments latéraux (4) sont produits par moulage.

10. Traverse selon l'une quelconque des revendications précédentes, dans laquelle le corps central (3) est fait d'un matériau qui convient pour l'extrusion et peut être choisi parmi des métaux, comme un alliage à base d'aluminium ou de magnésium, ou des thermoplastiques, de préférence chargés avec des fibres de renforcement.
